# EUROPEAN PATENT SPECIFICATION

(11) **EP 3 371 997 B1**
(45) Date of publication and mention of the grant of the patent: **08.11.2023**
(21) Application number: 16861666.2
(22) Date of filing: 23.09.2016
(51) Int. Cl.: H04L 43/50, H04B 17/00, H04W 24/06, H04L 41/0803, H04B 17/14, H04B 17/17

(54) **SPECIAL TEST FUNCTIONS FOR APPLICATION SPECIFIC DATA TRANSMISSION**
SPEZIELLE PRÜFFUNKTIONEN FÜR ANWENDUNGSSPEZIFISCHE DATENÜBERTRAGUNG
FONCTIONS DE TEST SPÉCIALES DESTINÉES À LA TRANSMISSION DE DONNÉES SPÉCIFIQUES À UNE APPLICATION

(30) Priority: 05.11.2015 US 201562251377 P
(43) Date of publication of application: 12.09.2018
(73) Proprietor: Nokia Technologies Oy, 02610 Espoo (FI)
(72) Inventor: KOSKINEN, Jussi-Pekka, 90420 Oulu (FI); KOSKELA, Jarkko, 90500 Oulu (FI); SEBIRE, Benoist Pierre, 162-0825 Tokyo (JP)
(74) Representative: Page White Farrer
(86) International application number: PCT/FI2016/050660
(87) International publication number: WO 2017/077174

(56) References cited:
- EP-A1- 2 117 266
- WO-A1-2014/087130
- WO-A2-02/082670
- US-A1- 2004 185 785
- US-A1- 2011 289 489
- US-A1- 2013 178 203
- US-A1- 2014 022 904
- NOKIA ET AL: "Introduction of UE test loop mode 3 (SDU counters) to support MTCH performance testing", 3GPP DRAFT; R5-062546 (DRAFT CR TO 34.109 FOR RLC SDU COUNTING), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Tallinn; 20060825, 25 August 2006 (2006-08-25), XP050176181, [retrieved on 2006-08-25]

## Description

### CROSS-REFERENCE TO RELATED APPLICATION:

This application is related to and claims the benefit and priority of U.S. Provisional Patent Application No. 62/251,377, filed November 5, 2015.

### BACKGROUND:

### Field:

Various communication systems may benefit from appropriate testing, which ensures that the user equipment under a test is implemented according to requirements specified in the core specifications. For example, systems that include application specific data transmission may benefit from special test functions for such transmission.

### Description of the Related Art:

A work item called, "RAN aspects of Application specific Congestion control for Data Communication (ACDC)," is described in third generation partnership project (3GPP) RP- 150512. The work item relates to control of access attempts for the particular, operator-identified applications.

In addition the issue on radio access network (RAN) congestion caused by unattended/background data traffic was discussed in 3GPP R2- 154033 and R2-154144. Background traffic may be caused by smartphone applications and notification services making frequent network connections involving small amounts of data. This may be performed by the application when no direct user interaction is being carried out. This is sometimes referred to as unattended data traffic, or more commonly known as background data, classified based on, for example the screen/keypad lock being activated, length of time since the user equipment (UE) last received any input from the user, or the like.

3GPP TS 36.509 specifies special conformance testing functions for the UE. Special test functions which are specified in 3GPP TS 36.509 include test loop modes A-E.

UE test loop mode A provides loopback of packet data convergence protocol (PDCP) service data units (SDUs) for bi-directional data radio bearers while UE is operating in enhanced universal terrestrial radio access (E-UTRA) mode. The downlink PDCP SDUs received by the UE on each bi-directional data radio bearer are returned on the same radio bearer regardless of the PDCP SDU contents and of the track flow template (TFT) of the associated evolved packet system (EPS) bearer context.

UE test loop mode B provides loopback of PDCP SDUs (E-UTRA and UTRA), sub network dependent convergence protocol (SNDCP) packet data units (PDUs) (global system for mobile communication (GSM)/general packet radio service (GPRS)) and radio link protocol (RLP) PDUs (code division multiple access 2000 (CDMA2000)) for bidirectional EPS bearers while UE is operated in E-UTRA, UTRA, GSM/GPRS or CDMA2000 modes.

UE test loop mode C provides counting of successfully received multimedia broadcast multicast service (MBMS) packets on a given multicast traffic channel (MTCH) while UE is operating in E-MBMS/E-UTRA mode.

UE test loop mode D provides announcing or monitoring of proximity services (ProSe) Direct Discovery messages. UE test loop mode E provides either transmission or reception of ProSe Direct Communication packets.

EP2117266A1 describes techniques for verifying compliance of a communication device with one or more requirement specifications.

NOKIA ET AL: "Introduction of UE test loop mode 3 (SDU counters) to support MTCH performance testing" (R5-0625546) introduces UE RLC SDU counters for MTCH performance measurements.

US2004/0185785A1 describes techniques to test a wireless communication link using configurable channels and rates.

### SUMMARY:

The invention relates to a user equipment, a system simulator, methods and computer program products as set forth in the claims. It will be understood that aspects of this disclosure falling outside the scope of the claims are not part of the invention.

### BRIEF DESCRIPTION OF THE DRAWINGS:

For proper understanding of the invention, reference should be made to the accompanying drawings, wherein:
Figure 1 illustrates example procedures that can be followed according to an implementation of test loop mode F, according to certain aspect s.
Figure 2 illustrates an architecture according to certain aspects.
Figure 3 illustrates methods according to certain aspects.
Figure 4 illustrates a system according to certain aspects.
Figure 5 illustrates further methods according to certain embodiments.

### DETAILED DESCRIPTION:

Certain aspects relate to solutions targeted to 3GPP TS 36.509 to test application specific congestion control for data communication (ACDC) requirements. Certain aspects are also or alternatively related to radio access network (RAN) level mechanisms to handle unattended/background data traffic.

3GPP (or whole wireless industry including UE and network (NW) vendors, as well as operators and end-users) may benefit from the definition of test cases to test ACDC functionality as well as from a mechanism to handle unattended/background data traffic. Moreover, a special test function may be needed to test the above functionality, mechanisms and requirements, because real applications are not typically used in the conformance testing, because of their non-deterministic and unpredictable behavior. In addition operating system (OS) functionality creates even more difficulties for the testing.

Certain aspects define a special test function in the ACDC and/or background/unattended data testing. This special test function may be implemented in a user equipment (UE) and system simulator (SS). The SS may provide ACDC and/or background/unattended/attended data related information via test control (TC) messages and the UE may transmit data to the SS using the received information / configuration if the broadcast and/or dedicated signaling, namely normal signaling specified in 3 GPP TS 36.331, allows such transmission.

Certain aspects, for example, can provide a new test loop mode F and a new test loop mode G. According to a first option, for test loop mode F, transmission can be based on configuration.

For example, UE test loop mode F can provide transmission of application specific packets. For application packet transmit operation, UE test loop mode F can provide a trigger for transmission of packets, for example internet protocol (IP) packets, according to the configured data characteristics. Configuration of the UE test loop mode F can includes, for example, some of the following information. The configuration can include a number of running applications, for example 0 to an arbitrary maximum integer n. The configuration can also include an ACDC category (e.g. a, b, c and d etc.) per application and a type of data per application, for example foreground and/or background or unattended / attended.

The configuration can also specify a number of packets, for example from one of the following options: packets per data burst, PDCP SDUs, TCP/IP. The configuration can further specify an inter arrival time between UL packet, or bursts, per application or delay between packet or bursts. The inter arrival time may be, for example, every 30 seconds. The delay may be, for example, 45 seconds.

These configuration options can be used in any combination. After the UE is configured with test loop mode F, the data can be generated according to the configuration.

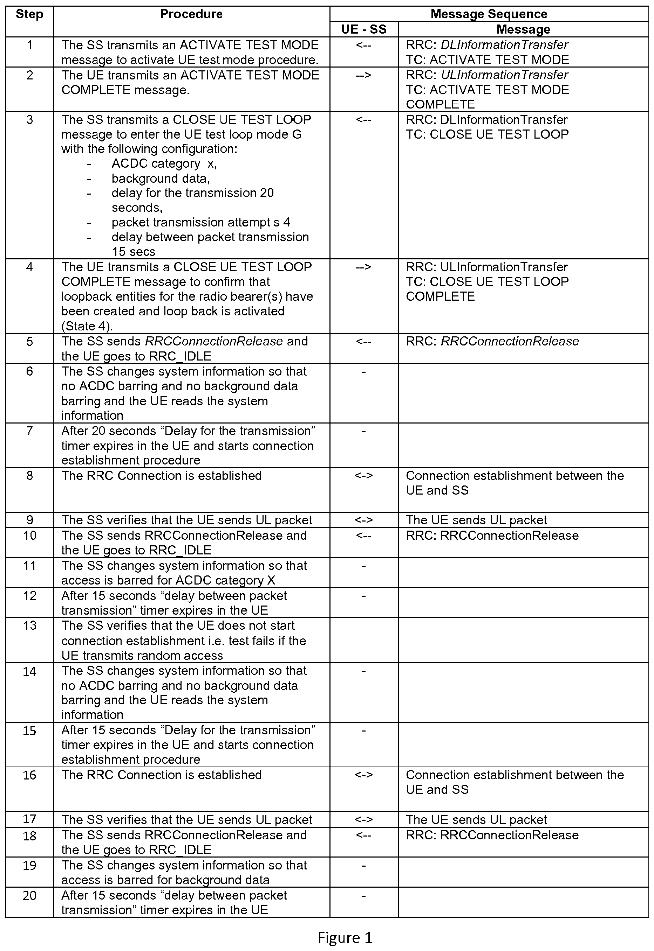

Figure 1 illustrates example procedures that can be followed according to an implementation of test loop mode F, according to certain embodiments. As shown in Figure 1, the SS can transmit an ACTIVATE TEST MODE message to activate UE test mode procedure. Then, the UE can transmit an ACTIVATE TEST MODE COMPLETE message. The SS can then transmit a CLOSE UE TEST LOOP message to enter the UE test loop mode G with the following configuration: ACDC category x, background data, delay for the transmission 20 seconds, packet transmission attempts 4, delay between packet transmission 15 seconds.

Then, the UE can transmit a CLOSE UE TEST LOOP COMPLETE message to confirm that loopback entities for the radio bearer(s) have been created and loop back is activated (State 4). Next, the SS can send *RRCConnectionRelease* and the UE can go to RRC_IDLE. Subsequently, the SS can change system information so that there is no ACDC barring and no background data barring and the UE can read the system information.

After 20 seconds "Delay for the transmission" timer expires in the UE, the connection establishment procedure can commence. The RRC connection can be established and the SS can verify that the UE sends an uplink (UL) packet. Then, the SS can send *RRCConnectionRelease* and the UE can go to RRC _IDLE. Subsequently, the SS can change system information so that access is barred for ACDC category X.

After 15 seconds "delay between packet transmission" timer expires in the UE, the SS can verify that the UE does not start connection establishment. Thus, the test may produce a fail result if the UE transmits random access. Then, the SS can change system information so that there is no ACDC barring and no background data barring and the UE can read the system information.

After 15 seconds "delay between packet transmission" timer expires in the UE, the RRC connection can be established and the SS can verify that the UE sends an UL packet. Then, the SS can send *RRCConnectionRelease* and the UE can go to RRC_IDLE. Subsequently, the SS can change system information so that access is barred for background data.

After 15 seconds "delay between packet transmission" timer expires in the UE, the SS can verify that the UE does not start connection establishment. Thus, the test may produce a fail result if the UE transmits random access.

According to a second option, test loop mode G, transmission can be based on loopback. For example, UE test loop mode G can provide loopback of application specific packets. For application packet transmit operation, UE test loop mode G can provide trigger for transmission of packets, such as IP packets. The SS can transmit a packet to the UE and the UE can loop the packet back, if allowed according to signaled ACDC and/or background/unattended data information. The UE can loop the packet back using at least some of the following information which may be provided to the UE. The information may be provided via TC message or packet to be looped back. The information may include, for example, ACDC category(s), type of data such as foreground and/or background/unattended, and delay for the transmission. For example, a timer can be started when the UE receives a first packet and when timer expires the packet transmission burst can be started.

The information can also specify a number of packets, for example from one of the following options: packets per data burst, PDCP SDUs, TCP/IP. The information can further specify an inter arrival time between UL packet, or bursts, per application or delay between packet or bursts.

The information can additionally specify a ratio of the DL vs. UL packet. For example, 1:1 can mean that if 1 DL packet is received the UE shall loop back 5 packets back, whereas 1:5 can mean that if 1 DL packet is received the UE shall loop back 5 packets back.

The same may be achieved using, for example, a scaling function where the size of data is scaled. For example, the UE may be configured to send two times the same data back if scaling is set to 200%.

After the UE is configured with test loop mode F, the SS can transmit data, for example a PDCP SDD, to the UE and the UE can send it back as a loopback immediately or after the delay explained above.

The above-described functionality may enable the testing of UE functionality related, for example, to ACDC or whether/when the UE is / is not allowed to transmit background data. Configuration of the above data characteristics may alternatively be performed by man to machine interface (MMI) or automated test (AT) command.

Although the above description focused on RRC idle mode behavior, connected mode behavior could also be tested using certain embodiments. For example, it could be checked by the SS that the UE does not indicate data in buffer status report (BSR) or the UE shall not transmit a scheduling request (SR) for barred data, whether barred data is from a specific ACDC category or background.

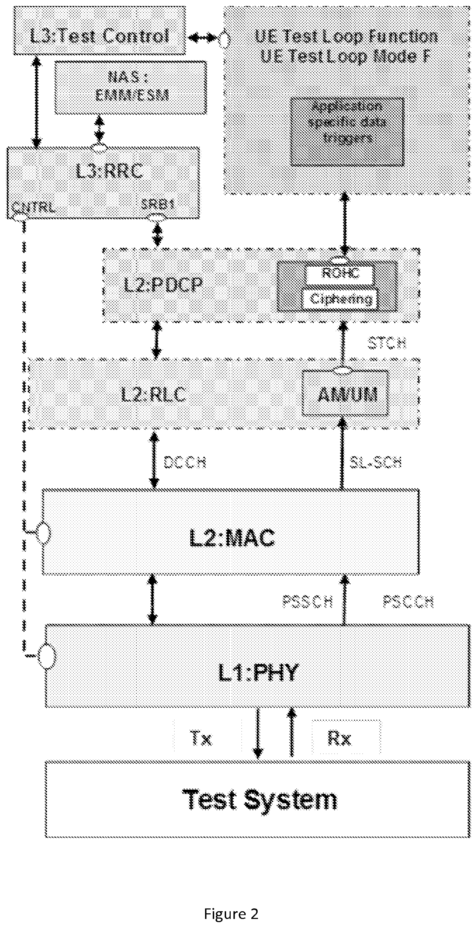

Figure 2 illustrates an architecture according to certain embodiments. As shown in Figure 2, an architecture can include a variety of components, include L3 test control. The L3 test control can provide for configuration of the new test loop mode with TC messages.

The architecture can also include a UE test loop mode function. This function can control loopback according to configuration, for example using loopback or data generation based on the configuration.

Generating data for transmission can be variously implemented. For example, a user equipment may receive test configuration which indicates ACDC category X and packet transmission attempts = 2 are to be used. In this case, the user equipment may attempt to transmit data twice, and the data for which transmission is attempted can belong to ACDC category X.

The architecture can also include a nearby test system. The test system may implement the new loop back mode(s) including TC messages, data sending and reception and checking the UE transmissions according to configured configuration.

Furthermore, the architecture may also include a physical (PHY) layer, a medium access control (MAC) layer, a radio link control (RLC) layer, and a radio resource control (RRC) layer. These and other illustrated layers, as well as other unillustrated layers that may be found in user equipment, may be implemented in various embodiments.

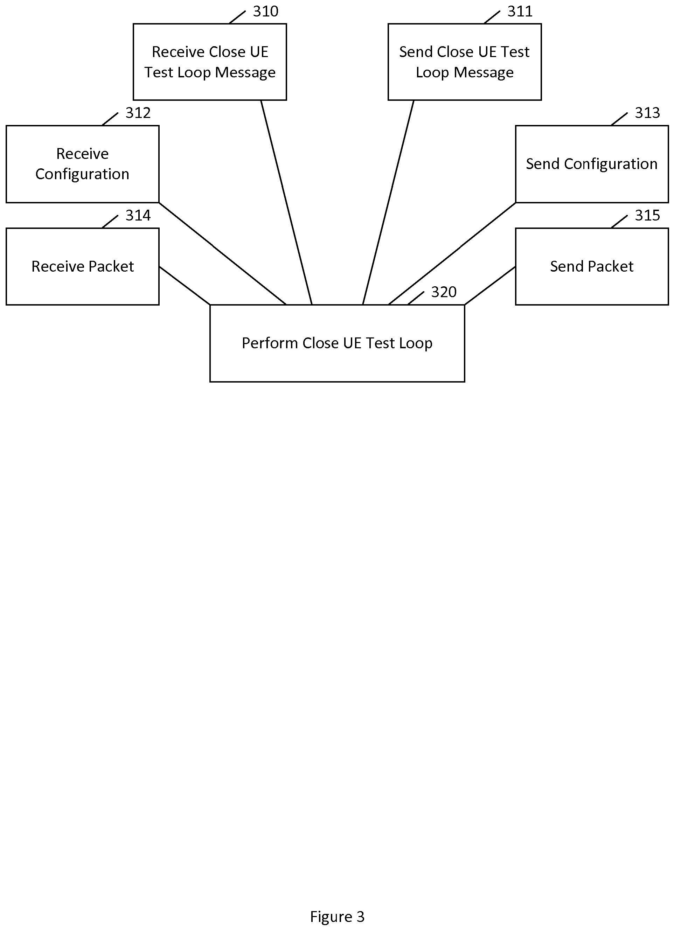

Figure 3 illustrates methods according to certain embodiments. As shown in Figure 3, a method can include, at 310 receiving, at a user equipment, a close user equipment test loop message from a system simulator. The message can be sent at 311. The method can also include, at 312, receiving a configuration from the system simulator and/or, at 314, receiving a packet from the system simulator. The configuration and/or packet can be respectively sent from the system simulator at 313 and 315.

The method can further include, at 320, performing a close user equipment test loop following the configuration or based on the packet. This test loop can be performed by the UE and by the system simulator, working together with one another.

The message is configured to cause the user equipment to enter the user equipment test loop mode F or G.

The configuration can include an application specific congestion control for data communication (ACDC) category, an indication regarding background data, a length of a timer for delay for the transmission, a number of packet transmission attempts, and a length of a timer for delay between packet transmission.

The performing the test loop can be further based on a preconfigured configuration. The preconfigured configuration can include at least one of a number of running applications, an ACDC category per application, a type of data per application, a number of packets, an inter arrival time between UL packets or bursts, or a delay between packets or bursts.

Similarly, the packet can include at least one of an application specific congestion control for data communication (ACDC) category, an indication regarding background data, a length of a timer for delay for the transmission, a number of packet transmission attempts, or a length of a timer for delay between packet transmission.

The performing the test loop can include looping back the packet immediately or after a delay. The looping back the packet can include looping back a plurality of packets according to a configured ratio or scale to the packet.

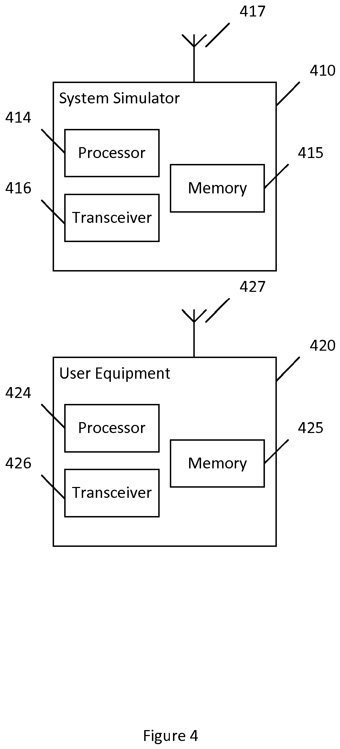

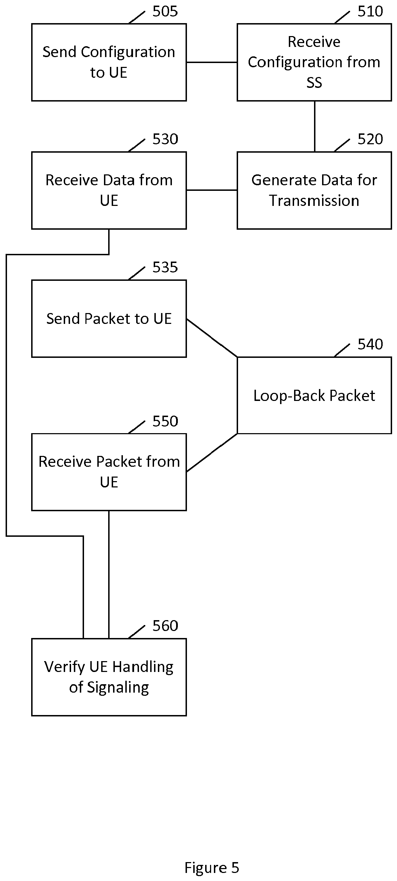

Figure 4 illustrates a system according to certain embodiments of the invention. It should be understood that each block of the flowchart of Figure 3 and/or Figure 5 may be implemented by various means or their combinations, such as hardware, software, firmware, one or more processors and/or circuitry. In one embodiment, a system may include several devices, such as, for example, system simulator 410 and user equipment (UE) or user device 420. The system may include more than one UE 420 and more than one system simulator 410, although only one of each is shown for the purposes of illustration.

Each of these devices may include at least one processor or control unit or module, respectively indicated as 414 and 424. At least one memory may be provided in each device, and indicated as 415 and 425, respectively. The memory may include computer program instructions or computer code contained therein, for example for carrying out the embodiments described above. One or more transceiver 416 and 426 may be provided, and each device may also include an antenna, respectively illustrated as 417 and 427. Although only one antenna each is shown, many antennas and multiple antenna elements may be provided to each of the devices. Other configurations of these devices, for example, may be provided. For example, system simulator 410 and UE 420 may be additionally configured for wired communication, in addition to wireless communication, and in such a case antennas 417 and 427 may illustrate any form of communication hardware, without being limited to merely an antenna.

Transceivers 416 and 426 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example.

A user device or user equipment 420 may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof. The user device or user equipment 420 may be a sensor or smart meter, or other device that may usually be configured for a single location.

In an exemplifying embodiment, an apparatus, such as a node or user device, may include means for carrying out embodiments described above in relation to Figure 3 and/or Figure 5.

Processors 414 and 424 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors. Additionally, the processors may be implemented as a pool of processors in a local configuration, in a cloud configuration, or in a combination thereof.

For firmware or software, the implementation may include modules or unit of at least one chip set (e.g., procedures, functions, and so on). Memories 415 and 425 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as system simulator 410 and/or UE 420, to perform any of the processes described above (see, for example, Figure 3 and/or Figure 5). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments of the invention may be performed entirely in hardware.

Furthermore, although Figure 4 illustrates a system including a system simulator 410 and a UE 420, embodiments of the invention may be applicable to other configurations, and configurations involving additional elements, as illustrated and discussed herein. For example, multiple user equipment devices and multiple system simulators may be present.

Certain embodiments may have various benefits and/or advantages. For example, with certain embodiments ACDC related UE requirements can be tested. Moreover, certain embodiments may provide a RAN level mechanism to handle unattended/background data traffic requirements, which can be tested. Furthermore, deterministic UE behavior can be provided, which may enable deployment of the above features.

Figure 5 illustrates further methods according to certain embodiments. As shown in Figure 5, a method can include, at 510, receiving, at a user equipment (UE), a configuration sent from a system simulator (SS) at 505. The UE can, at 520, generate data for transmission according to the received configuration. The system simulator can then receive this data at 530.

The method can also include UE transmission based on the loop-back. For example, a system simulator, at 535, can transmit packets to the UE and the UE can loop the packets back at 540 according to a configuration. The system simulator can receive the looped-back packets at 550. In this method, the UE may not independently generate the packet but may loop back the received packets.

The method of 505-530 can be performed before, after, or independently of the method of 535-550 as a second method. These methods may allow the system simulator to verify that the UE respects signaling. For example, the SS may be able to verify, at 560, that the UE transmits allowed traffic and only when allowed, or otherwise properly handles the signaling.

### List of Abbreviations

- ACDC: Application specific Congestion control for Data Communication
- AT: Automated Test command
- UE: User Equipment
- MMI: Man to Machine Interface
- NW: Network
- RA: Random Access
- SS: System Simulator
- TC: Test Control

## Claims

1. A user equipment, comprising:
means for receiving a test configuration sent from a system simulator;
means for generating data for transmission according to the received test configuration; and
means for transmitting the data to the system simulator;
**characterized in that** the test configuration comprises at least one of the following: a number of running applications, an application specific congestion control for data communication category per application, a type of data per application, a number of uplink packets to be transmitted, an inter arrival time between uplink packets or between bursts of uplink packets per application, a delay between the user equipment receiving a downlink packet and looping back a burst of uplink packets or a number of uplink packet transmission attempts.

2. The user equipment of claim 1, wherein the means for transmitting the data comprises:
means for receiving the downlink packet from the system simulator; and
means for conditionally looping back the burst of uplink packets to the system simulator according to the received test configuration.

3. The user equipment of claim 2, wherein the uplink packet is looped back to the system simulator only when not barred by the test configuration.

4. A system simulator, comprising:
means for sending a test configuration to a user equipment; and
means for receiving data from the user equipment according to the received test configuration;
**characterized in that** the test configuration comprises at least one of the following: a number of running applications, an application specific congestion control for data communication category per application, a type of data per application, a number of uplink packets to be transmitted, an inter arrival time between uplink packets or between bursts of uplink packets per application, a delay between the user equipment receiving a downlink packet and looping back a burst of uplink packets or a number of uplink packet transmission attempts.

5. The system simulator of claim 4, further comprising:
means for verifying the user equipment handling of signaling based on the received data.

6. The system simulator of claim 5, wherein the verifying comprises providing a fail result if the data was sent contrary to a bar in the test configuration or providing a success result if the data was sent in accordance with the test configuration.

7. A method, comprising:
receiving (312), by a user equipment, a test configuration sent from a system simulator;
generating, by the user equipment, data for transmission according to the received test configuration; and
transmitting, by the user equipment, the data to the system simulator;
**characterized in that** the test configuration comprises at least one of the following: a number of running applications, an application specific congestion control for data communication category per application, a type of data per application, a number of uplink packets to be transmitted, an inter arrival time between uplink packets or between bursts of uplink packets per application, a delay between the user equipment receiving a downlink packet and looping back a burst of uplink packets or a number of uplink packet transmission attempts.

8. A method, comprising:
sending, by a system simulator, a test configuration to a user equipment; and
receiving, by the system simulator, data from the user equipment according to the received test configuration;
**characterized in that** the test configuration comprises at least one of the following: a number of running applications, an application specific congestion control for data communication category per application, a type of data per application, a number of uplink packets to be transmitted, an inter arrival time between uplink packets or between bursts of uplink packets per application, a delay between the user equipment receiving a downlink packet and looping back a burst of uplink packets or a number of uplink packet transmission attempts.

9. A computer program product comprising instructions which when executed by a processor allow a user equipment to perform the method of claim 7.

10. A computer program product comprising instructions which when executed by a processor allow a system simulator to perform the method of claim 8.

## Patentansprüche

1. Endgerät, umfassend:
Mittel zum Empfangen einer von einem Systemsimulator gesendeten Testkonfiguration;
Mittel zum Erzeugen von Daten zur Übertragung gemäß der empfangenen Testkonfiguration; und
Mittel zum Übertragen der Daten an den Systemsimulator;
**dadurch gekennzeichnet, dass** die Testkonfiguration mindestens Folgendes umfasst: eine Anzahl laufender Anwendungen, eine anwendungsspezifische Überlastkontrolle für die Datenkommunikationskategorie pro Anwendung, eine Art von Daten pro Anwendung, eine Anzahl von zu übertragenden Uplink-Paketen, eine Zwischenankunftszeit zwischen Uplink-Paketen oder zwischen Bursts von Uplink-Paketen pro Anwendung, eine Verzögerung zwischen dem Empfang eines Downlink-Pakets durch das Endgerät und dem Zurückschleifen eines Bursts von Uplink-Paketen oder eine Anzahl von Uplink-Paket-Übertragungsversuchen.

2. Endgerät nach Anspruch 1, wobei die Mittel zum Übertragen der Daten umfassen:
Mittel zum Empfangen des Downlink-Pakets von dem Systemsimulator; und
Mittel zum bedingten Zurückschleifen des Bursts von Uplink-Paketen an den Systemsimulator gemäß der empfangenen Testkonfiguration.

3. Endgerät nach Anspruch 2, wobei das Uplink-Paket nur dann an den Systemsimulator zurückgeschleift wird, wenn es nicht durch die Testkonfiguration gesperrt ist.

4. Systemsimulator, umfassend:
Mittel zum Senden einer Testkonfiguration an ein Endgerät; und
Mittel zum Empfangen von Daten von dem Endgerät gemäß der empfangenen Testkonfiguration;
**dadurch gekennzeichnet, dass** die Testkonfiguration mindestens Folgendes umfasst: eine Anzahl laufender Anwendungen, eine anwendungsspezifische Überlastkontrolle für die Datenkommunikationskategorie pro Anwendung, eine Art von Daten pro Anwendung, eine Anzahl von zu übertragenden Uplink-Paketen, eine Zwischenankunftszeit zwischen Uplink-Paketen oder zwischen Bursts von Uplink-Paketen pro Anwendung, eine Verzögerung zwischen dem Empfang eines Downlink-Pakets durch das Endgerät und dem Zurückschleifen eines Bursts von Uplink-Paketen oder eine Anzahl von Uplink-Paket-Übertragungsversuchen.

5. Systemsimulator nach Anspruch 4, ferner umfassend:
Mittel zur Überprüfung der Signalverarbeitung durch das Endgerät auf der Grundlage der empfangenen Daten.

6. Systemsimulator nach Anspruch 5, wobei das Überprüfen darin besteht, ein Fehlerergebnis zu liefern, wenn die Daten entgegen einer Sperre in der Testkonfiguration gesendet wurden, oder ein Erfolgsergebnis zu liefern, wenn die Daten in Übereinstimmung mit der Testkonfiguration gesendet wurden.

7. Verfahren, umfassend:
Empfangen (312), durch ein Endgerät, einer von einem Systemsimulator gesendeten Testkonfiguration;
Erzeugen, durch das Endgerät, von Daten zur Übertragung gemäß der empfangenen Testkonfiguration; und
Übertragen der Daten durch das Endgerät an den Systemsimulator;
**dadurch gekennzeichnet, dass** die Testkonfiguration mindestens Folgendes umfasst: eine Anzahl laufender Anwendungen, eine anwendungsspezifische Überlastkontrolle für die Datenkommunikationskategorie pro Anwendung, eine Art von Daten pro Anwendung, eine Anzahl von zu übertragenden Uplink-Paketen, eine Zwischenankunftszeit zwischen Uplink-Paketen oder zwischen Bursts von Uplink-Paketen pro Anwendung, eine Verzögerung zwischen dem Empfang eines Downlink-Pakets durch das Endgerät und dem Zurückschleifen eines Bursts von Uplink-Paketen oder eine Anzahl von Uplink-Paket-Übertragungsversuchen.

8. Verfahren, umfassend:
Senden, durch einen Systemsimulator, einer Testkonfiguration an ein Endgerät; und
Empfangen, durch den Systemsimulator, von Daten von dem Endgerät gemäß der empfangenen Testkonfiguration;
**dadurch gekennzeichnet, dass** die Testkonfiguration mindestens Folgendes umfasst: eine Anzahl laufender Anwendungen, eine anwendungsspezifische Überlastkontrolle für die Datenkommunikationskategorie pro Anwendung, eine Art von Daten pro Anwendung, eine Anzahl von zu übertragenden Uplink-Paketen, eine Zwischenankunftszeit zwischen Uplink-Paketen oder zwischen Bursts von Uplink-Paketen pro Anwendung, eine Verzögerung zwischen dem Empfang eines Downlink-Pakets durch das Endgerät und dem Zurückschleifen eines Bursts von Uplink-Paketen oder eine Anzahl von Uplink-Paket-Übertragungsversuchen.

9. Computerprogrammprodukt umfassend Anweisungen, die, wenn sie von einem Prozessor ausgeführt werden, einem Endgerät erlauben, das Verfahren nach Anspruch 7 durchzuführen.

10. Computerprogrammprodukt umfassend Anweisungen, die, wenn sie von einem Prozessor ausgeführt werden, einem Systemsimulator erlauben, das Verfahren nach Anspruch 8 durchzuführen.

## Revendications

1. Équipement utilisateur, comprenant :
des moyens pour recevoir une configuration de test envoyée par un simulateur de système ;
des moyens pour générer des données à transmettre selon la configuration de test reçue ; et
des moyens pour transmettre les données au simulateur de système ;
**caractérisé en ce que** la configuration de test comprend au moins l'un des éléments suivants : un nombre d'applications en cours d'exécution, une commande d'encombrement spécifique à l'application pour une catégorie de communication de données par application, un type de données par application, un nombre de paquets de liaison montante à transmettre, un intervalle d'arrivée entre les paquets de liaison montante ou entre les rafales de paquets de liaison montante par application, un délai entre la réception par l'équipement utilisateur d'un paquet de liaison descendante et le rebouclage d'une rafale de paquets de liaison montante ou d'un nombre de tentatives de transmission de paquets de liaison montante.

2. Équipement utilisateur de la revendication 1, dans lequel les moyens pour transmettre les données comprennent :
des moyens pour recevoir le paquet de liaison descendante en provenance du simulateur de système ; et
des moyens pour reboucler conditionnellement la rafale de paquets de liaison montante vers le simulateur de système selon la configuration de test reçue.

3. Équipement utilisateur de la revendication 2, dans lequel le paquet de liaison montante est sousmis à un rebouclage vers le simulateur de système uniquement lorsque la configuration de test ne l'interdit pas.

4. Simulateur de système, comprenant :
des moyens pour envoyer une configuration de test à un équipement utilisateur ; et
des moyens pour recevoir des données de l'équipement utilisateur selon la configuration de test reçue ;
**caractérisé en ce que** la configuration de test comprend au moins l'un des éléments suivants : un nombre d'applications en cours d'exécution, une commande d'encombrement spécifique à l'application pour une catégorie de communication de données par application, un type de données par application, un nombre de paquets de liaison montante à transmettre, un intervalle d'arrivée entre les paquets de liaison montante ou entre les rafales de paquets de liaison montante par application, un délai entre la réception par l'équipement utilisateur d'un paquet de liaison descendante et le rebouclage d'une rafale de paquets de liaison montante ou d'un nombre de tentatives de transmission de paquets de liaison montante.

5. Simulateur de système de la revendication 4, comprenant en outre :
des moyens pour vérifier la gestion par l'équipement utilisateur de la signalisation sur la base des données reçues.

6. Simulateur de système de la revendication 5, dans lequel la vérification comprend la fourniture d'un résultat d'échec si les données ont été envoyées contrairement à une interdiction de la configuration de test, ou la fourniture d'un résultat de réussite si les données ont été envoyées conformément à la configuration de test.

7. Procédé, comprenant :
la réception (312), par un équipement utilisateur, d'une configuration de test envoyée par un simulateur de système ;
la génération, par l'équipement utilisateur, de données à transmettre selon la configuration de test reçue ; et
la transmission, par l'équipement utilisateur, des données au simulateur de système ;
**caractérisé en ce que** la configuration de test comprend au moins l'un des éléments suivants : un nombre d'applications en cours d'exécution, une commande d'encombrement spécifique à l'application pour une catégorie de communication de données par application, un type de données par application, un nombre de paquets de liaison montante à transmettre, un intervalle d'arrivée entre les paquets de liaison montante ou entre les rafales de paquets de liaison montante par application, un délai entre la réception par l'équipement utilisateur d'un paquet de liaison descendante et le rebouclage d'une rafale de paquets de liaison montante ou d'un nombre de tentatives de transmission de paquets de liaison montante.

8. Procédé, comprenant :
l'envoi, par un simulateur de système, d'une configuration de test à un équipement utilisateur ; et
la réception, par le simulateur de système, de données provenant de l'équipement utilisateur selon la configuration de test reçue ;
**caractérisé en ce que** la configuration de test comprend au moins l'un des éléments suivants : un nombre d'applications en cours d'exécution, une commande d'encombrement spécifique à l'application pour une catégorie de communication de données par application, un type de données par application, un nombre de paquets de liaison montante à transmettre, un intervalle d'arrivée entre les paquets de liaison montante ou entre les rafales de paquets de liaison montante par application, un délai entre la réception par l'équipement utilisateur d'un paquet de liaison descendante et le rebouclage d'une rafale de paquets de liaison montante ou d'un nombre de tentatives de transmission de paquets de liaison montante.

9. Produit programme informatique comprenant des instructions qui, lorsqu'elles sont exécutées par un processeur, permettent à un équipement utilisateur d'effectuer le procédé de la revendication 7.

10. Produit programme informatique comprenant des instructions qui, lorsqu'elles sont exécutées par un processeur, permettent à un simulateur de système d'effectuer le procédé de la revendication 8.
